# FASCICULE DE BREVET EUROPEEN

(11) **EP 1 354 728 B1**
(45) Date de publication et mention de la délivrance du brevet: **09.04.2008**
(21) Numéro de dépôt: 03004281.6
(22) Date de dépôt: 27.02.2003
(51) Int. Cl.: B60C 23/04

(54) **Dispositif d'articulation d'un capteur de pression de pneu sur une jante de véhicule automobile**
Gelenkvorrichtung von einem Reifendrucksensor auf einer Felge eines Fahrzeugs
Hinge device for a tyre pressure sensor on a rim of a vehicle

(30) Priorité: 16.04.2002 FR 0204730
(43) Date de publication de la demande: 22.10.2003
(73) Titulaire: Siemens VDO Automotive, 31036 Toulouse (FR)
(72) Inventeur: Luce, Dominique, 31210 Bordes-de-Rivière (FR)

(56) Documents cités:
- DE-A- 19 610 376
- US-A- 6 055 855

## Description

La présente invention concerne un dispositif d'articulation d'un capteur de pression de pneu sur la jante d'un véhicule automobile. Plus particulièrement cette articulation se situe entre un pied de valve et un boîtier électronique traitant les signaux délivrés par un capteur de pression du pneu.

Il est déjà connu de munir un véhicule automobile de capteurs de pression de pneu. De manière générale chaque roue du véhicule possède un capteur de pression placé sur sa jante à l'intérieur du pneu. Ces capteurs sont notamment adaptés pour mesurer la pression régnant à l'intérieur du pneu et sont placés à cet effet dans un boîtier électronique comportant également des moyens de traitement du signal mesuré et d'émission de ce signal vers un récepteur placé dans le véhicule. Si la pression dans un des pneumatiques varie de manière anormale un témoin d'alarme (un message sonore, un message visuel etc...) prévient le conducteur de l'anomalie détectée. Le conducteur est également informé de la position de la roue défaillante. Ces procédés de traitement du signal et de détermination des anomalies étant connus en eux ils ne seront pas détaillés par la suite.

Il est déjà connu de fixer le boîtier électronique du capteur de pression des pneus au niveau de la valve de gonflage des pneus. Avantageusement en serrant un écrou de vissage de cette valve sur la jante l'ensemble du boîtier électronique est fixé sur la jante.

A cet effet le boîtier est adapté pour recevoir le pied de la valve et pour basculer vers la jante (de manière à être plaqué contre le fond de la jante) pendant le vissage de la valve sur la jante. Un tel exemple de fixation est par exemple décrit dans les demandes de brevets FR 0110843 et FR 0111539 au nom de la demanderesse.

L'articulation du pied de valve par rapport au boîtier électronique se fait alors soit par un jeu de deux butées désaxées, soit par pliage d'un soufflet. Ces solutions donnent satisfaction et permettent de plaquer le boîtier au fond de la jante quelle que soit la dimension de cette jante (rayons de courbure différents). Cependant ces solutions sont relativement onéreuses à mettre en oeuvre et nécessitent un pied de valve muni d'extensions relativement difficiles à réaliser.

Il est également connu du document DE 19610376 un dispositif d'articulation d'un boîtier de capteur de pression pour pneumatiques monté sur une jante de véhicule automobile. Ce boîtier comporte une partie formant un berceau de réception destinée à accueillir le pied d'une valve de pression. Plus particulièrement, le pied de cette valve présente une partie sensiblement sphérique coopérant avec une zone de forme correspondante ménagée sur le berceau de réception

Le berceau de réception comporte quant à lui, un orifice situé en face d'un orifice de valve ménagé sur la jante, et permettant l'insertion de la valve de pression. De façon classique, la valve de pression comporte une tige filetée destinée à fixer le corps de valve sur la jante d'un pneumatique.

Plusieurs étapes sont nécessaires pour réaliser le positionnement de la valve de pression sur la jante. De façon classique, la tige filetée de la valve de pression est d'abord introduite à travers l'orifice de valve ménagé sur la jante. La valve de pression est ensuite fixée sur la jante au moyen d'un écrou de fixation venant se fixer sur la tige filetée de la valve de pression. La valve de pression dépasse ainsi vers l'extérieur de la jante. Le boîtier du capteur de pression est ensuite placé sur la valve de pression de façon à faire coopérer la tête de la valve de pression dans le berceau de réception du boîtier. Une liaison de type rotule est ainsi créée entre le berceau de réception et la tête de valve de pression. Cette liaison permet notamment de faire pivoter le boîtier et de le placer en fond de jante. Pour maintenir le boîtier du capteur de pression sur la valve de pression, un élément de fixation en forme de plaque ménagé sur le boîtier de fixation coopère par emboîtement avec un autre élément de fixation ménagé sur le corps de la valve de pression.

Cette solution technique nécessite un nombre d'étapes complexes pour réaliser le maintien du boîtier au fond de la jante.

Le but de la présente invention est de créer une articulation de pied de valve sur un boîtier pouvant plaquer le boîtier contre le fond de la jante quel que soit le diamètre de cette jante. Cette articulation doit rester simple à fabriquer et peu onéreuse.

A cet effet la présente invention concerne un dispositif d'articulation d'un capteur de pression de pneu sur une jante de véhicule automobile, le dit dispositif étant constitué par :
- une valve de gonflage des pneus présentant un pied adaptée pour venir au contact avec une partie correspondante dite berceau de réception d'un boîtier électronique de capteur de pression des pneus, la dite valve présentant en outre un fût fileté adapté pour être introduit à travers un orifice d'une jante de roue et pour dépasser vers l'extérieur de cette jante, le dit pied de valve étant situé dans le prolongement du fût,
- un boîtier électronique de pression des pneus recevant le pied de valve dans un berceau de réception, le dit boîtier étant plaqué contre le fond de la jante par serrage d'un écrou de fixation sur la partie filetée du fût de la valve, le pied de valve présentant une partie sensiblement sphérique coopérant avec une zone de forme correspondante ménagée sur le berceau de réception,

Ce dispositif d'articulation est remarquable en ce que le fût de la valve est destiné à passer à travers une lumière réalisée dans le berceau de réception, puis à travers l'orifice réalisé dans la jante de manière à dépasser vers l'extérieur de la jante, la lumière permettant de positionner le fût de la valve par rapport au boîtier, la pied de la valve coopérant alors avec le berceau de réception du boîtier pour plaquer ce boîtier contre la jante, l'écrou de vissage permettant de fixer et de bloquer en position l'ensemble constitué par le pied de valve et le berceau de réception sur la jante.

De manière avantageuse le pied de valve et la partie du boîtier en contact avec ce pied de valve sont munis d'une pluralité de facettes. La coopération entre une facette du pied de valve et une des facettes du boîtier permet de fixer l'angle d'inclinaison entre la valve et le boîtier. De ce fait il y a un accostage parfait (en fonction du rayon de courbure de la jante) du boîtier vers le fond de la jante.

En fonction du nombre de facettes réalisées sur le pied de valve et sur le boîtier, on dispose d'un certain nombre d'angles d'inclinaison possibles entre la valve et le boîtier. Il suffit de choisir un couple de facettes adapté (une sur le pied de valve, une sur le boîtier) pour plaquer le boîtier contre la jante en fonction du rayon de courbure de cette jante.

En variante la partie sphérique du pied de valve est directement en contact avec une partie sphérique du boîtier. Ces deux parties ne présentent pas de facettes. Elles présentent par contre des moyens de serrage sans glissement l'une par rapport à l'autre (ergots et rainures par exemple). Dans ce cas, lors du serrage de l'écrou de fixation de la valve sur le fût, il suffit d'appuyer le boîtier contre la jante pour régler l'angle d'inclinaison du boîtier par rapport à la jante. Le basculement du boîtier en fond de jante lors du serrage est de ce fait manuel.

Avantageusement une pièce de renfort est placée entre le boîtier et la jante de manière à éviter tout problème de matage entre ces deux éléments.

D'autres avantages, objets et caractéristiques de la présente invention ressortiront d'ailleurs de la description qui suit, à titre d'exemple non limitatif, en référence aux dessins annexés dans lesquels :
La figure 1 est une vue schématique représentant un dispositif selon un premier mode de réalisation de l'invention, avant mise en place sur un véhicule,
Les figures 2a et 2b sont des vues schématiques analogues à la figure 1 montrant un dispositif selon la présente invention, monté sur une jante de roue avec un angle de basculement respectivement de 0° et d'environ 90°,
La figure 3, est une vue schématique représentant un dispositif selon l'invention, selon un second mode de réalisation de l'invention,
Les figures 4a et 4b sont des vues schématiques analogues à la figure 3, montrant un dispositif selon la présente invention monté sur une jante de roue avec un angle de basculement respectivement de 0° et d'environ 90°, et
La figure 5 est une vue schématique montrant une pièce de renfort selon l'invention.

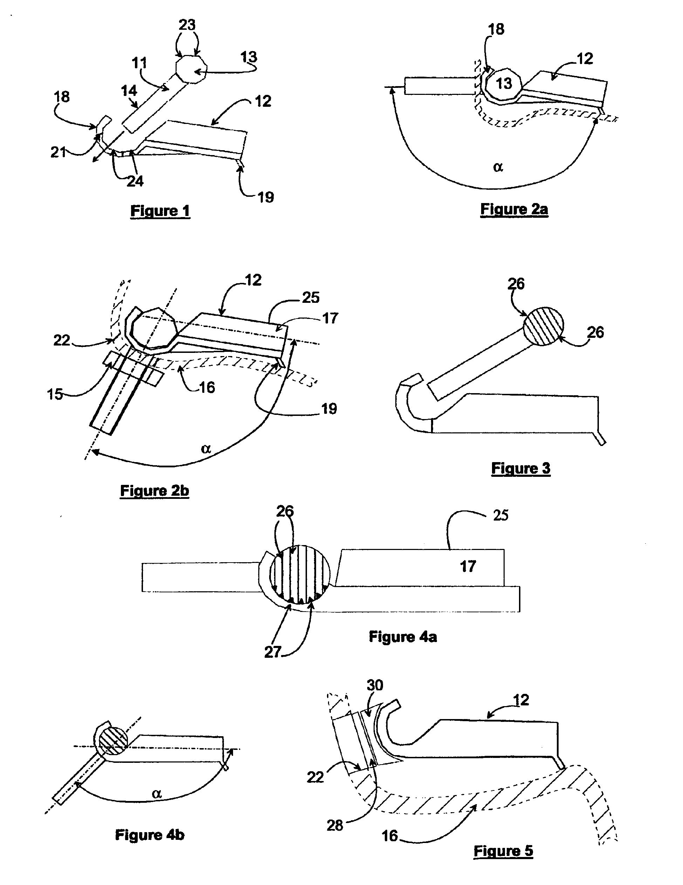

Selon la forme de réalisation illustrée aux figures 1 et 2, le dispositif d'articulation 10 selon la présente invention comporte :
- une valve de gonflage 11 et
- un boîtier électronique 12.

Plus particulièrement la valve de gonflage 11 présente un pied 13 et un fût 14 fileté sur une partie de sa hauteur, le dit fût étant réalisé dans le prolongement du pied. Un écrou de vissage 15 (figure 2b) coopère avec le filetage du fût pour maintenir la valve sur une jante 16 (schématisée en coupe et en pointillés). De préférence cette valve est réalisée en métal (par exemple en aluminium).

Le boîtier électronique 12 est de préférence réalisé en matière plastique et comporte un logement 17, recevant les capteurs nécessaires (pression, température, accéléromètres etc...) et des composants électroniques (non représentés) de traitement des signaux mesurés par ces capteurs. Ce logement comporte également une partie des moyens d'émissions des données mesurées vers une unité centrale située généralement dans le véhicule. Le traitement des données mesurées étant tout à fait classique, il ne sera pas détaillé ici.

Ce boîtier électronique comporte d'autre part un berceau de réception 18 adapté pour coopérer avec le pied de valve, comme cela sera expliqué plus loin.

Une languette souple 19 est prévue sur toute la longueur du boîtier. Lorsque le boîtier est mis en place au fond de la jante 16 (figure 2a ou 2b) cette languette souple est en contact avec le fond de la jante et évite ainsi la propagation de vibrations entre la jante et le boîtier.

Comme on le voit mieux aux figures 2a et 2b, le fût 14 de la valve 12 est destiné à passer à travers une lumière 21 réalisée dans le berceau de réception 18, puis à travers un orifice 22 réalisé dans la jante de manière à dépasser vers l'extérieur de la jante. La lumière 21 permet de positionner le fût de la valve par rapport au boîtier de 0 à 45°. Le pied de la valve coopère alors avec le berceau de réception du boîtier pour plaquer ce boîtier contre la jante 16. L'écrou de vissage 15 permet de fixer et de bloquer en position l'ensemble constitué par le pied de valve et le berceau de réception sur la jante 16.

Avantageusement selon un premier mode de réalisation le pied de valve est de forme sensiblement sphérique et est muni d'une première pluralité de facettes 23 destinées à coopérer avec une seconde pluralité de facettes 24 réalisées sur le berceau de réception du boîtier (lui aussi de forme sensiblement sphérique).

Les facettes ménagées sur le pied de valve et sur le berceau de réception du boîtier permettent de régler l'angle α entre l'axe longitudinal de la valve et l'axe longitudinal du boîtier. Le réglage de cet angle permet quelle que soit la courbure de la jante au niveau du passage de valve de plaquer le boîtier électronique contre le fond de la jante.

On rappelle, en effet, que ce boîtier présente un poids de l'ordre de quelques dizaines de grammes, et est placé à l'intérieur du pneumatique du véhicule. Lorsque le véhicule se déplace, la rotation de la roue (dans laquelle ce boîtier est placé) le soumet à des forces d'accélérations pouvant aller jusqu'à 2000 G.

Selon ce premier mode de réalisation le basculement du boîtier vers le fond de la jante est provoqué automatiquement (prédéterminé) par l'angle d'inclinaison entre le pied de valve et le boîtier. Cet angle pouvant être choisi par coopération d'une des facettes du pied avec une des facettes du berceau du boîtier.

Selon la facette choisie sur le pied et celle choisie sur le boîtier il est possible de déterminer un angle spécifique et donc de plaquer le boîtier contre le fond de la jante quelle que soit la courbure de la jante. Le nombre de facettes est suffisamment grand pour permettre d'obtenir un grand nombre d'angles prédéterminés. Néanmoins ce nombre est prédéterminé au départ lors de la réalisation du pied de valve et du boîtier correspondant.

La figure 2a illustre par exemple un angle α de 180° et la figure 2b illustre un même dispositif pour lequel l'angle α est de 90° environ.

Bien entendu les facettes réalisées sur le pied de valve et celles réalisées en correspondance sur le boîtier peuvent constituer des polygones réguliers ou irréguliers. Dans le cas de polygones irréguliers, il est possible d'obtenir un plus grand nombre d'angles α. Chacune des facettes (23) de la première pluralité et de la seconde pluralité (24) présente alors une inclinaison différente.

On notera d'autre part que dans cette forme de réalisation lorsque l'on a choisi au montage les facettes du pied de valve et du boîtier devant coopérer, l'angle α est automatiquement fixé.

Il est à noter que seule la partie inférieure (sur les dessins) du pied de valve est appelée à coopérer avec le boîtier électronique. De ce fait la pluralité de facettes présentes sur le pied de valve peut être réalisée uniquement sur la partie inférieure du pied. La partie supérieure peut alors présenter toute forme (tronquée, sphérique, autre...).

Selon un second mode de réalisation de l'invention (figures 3, 4a, 4b et 5) l'angle α n'est pas prédéterminé. Dans ce mode de réalisation, le pied de valve est sphérique (ou sphérique tronquée en partie supérieure). Ce pied sphérique coopère avec un berceau de réception de forme complémentaire, réalisé dans le boîtier.

Dans ce cas le pied de valve peut pivoter dans le berceau de réception pendant toute la durée du vissage de l'écrou 15. Plus particulièrement lors du vissage de cet écrou 15 un opérateur appuie sur la face supérieure 25 du boîtier de manière à plaquer celui-ci au fond de la jante 16. Le basculement et la fixation du boîtier au fond de la jante 16 n'est plus automatique, mais manuel. Néanmoins ce plaquage est possible grâce à la coopération des surfaces sphériques du pied de valve et du berceau de réception du boîtier.

Pour faciliter la fixation et le blocage (assurer un serrage sans glissement) de la valve par rapport au boîtier, le pied de valve peut être muni d'une pluralité de rainures 26 coopérant avec une pluralité d'ergots 27 ménagés sur le berceau de réception du boîtier électronique.

Ce second mode de réalisation présente l'avantage de s'adapter au rayon de courbure exact de la jante, quel que soit ce rayon de courbure. De ce fait un même dispositif selon l'invention peut être mis en place sur des jantes différentes et ainsi équiper différents véhicules sans que cela ne complique sa fabrication.

Quel que soit le mode de réalisation utilisé, il est possible d'interposer entre le boîtier et la jante une pièce de renfort 30, de préférence métallique. Une première face de cette pièce épousant au plus près le profil externe du berceau de réception du boîtier et une seconde face étant adaptée pour coopérer avec la jante et un joint d'étanchéité (non représenté) placé au niveau de l'orifice 22 de passage de valve de la jante.

Cette pièce de renfort 30 a pour but d'éviter tout matage des matériaux entre le boîtier et sa zone d'appui sur la jante (ou un joint d'étanchéité éventuellement protégé par une rondelle 28).

Bien entendu la présente invention n'est pas limitée aux modes de réalisations ci-dessus décrits et englobe toute variante à la portée de l'homme de l'art. Ainsi les rainures 26 peuvent indifféremment être réalisées sur le boîtier et les ergots 27 sur le pied de valve. De même l'angle α peut varier entre 0° et 270° en fonction des différentes courbures de jante sur lesquels le dispositif selon l'invention doit être placé.

## Revendications

1. Dispositif d'articulation (10) d'un capteur de pression de pneu sur une jante (16) de véhicule automobile, le dit dispositif étant constitué par :
- une valve de gonflage (11) des pneus présentant un pied (13) adaptée pour venir au contact avec une partie correspondante dite berceau de réception (18) d'un boîtier électronique (12) de capteur de pression des pneus, la dite valve présentant en outre un fût fileté (14) adapté pour être introduit à travers un orifice (22) d'une jante de roue et pour dépasser vers l'extérieur de cette jante, le dit pied de valve étant situé dans le prolongement du fût,
- un boîtier électronique (12) de pression des pneus recevant le pied de valve (13) dans un berceau de réception (18),
le dit boîtier étant plaqué contre le fond de la jante (16) par serrage d'un écrou (15) de fixation sur la partie filetée du fût de la valve, le pied de valve présentant une partie sensiblement sphérique coopérant avec une zone de forme correspondante ménagée sur le berceau de réception (18)
le dit dispositif d'articulation étant **caractérisé en ce que** le fût (14) de la valve (12) est destiné à passer à travers une lumière (21) réalisée dans le berceau de réception (18), puis à travers l'orifice (22) réalisé dans la jante de manière à dépasser vers l'extérieur de la jante (16), la lumière (21) permettant de positionner le fût de la valve par rapport au boîtier, la pied de la valve coopérant alors avec le berceau de réception du boîtier pour plaquer ce boîtier contre la jante (16), l'écrou de vissage (15) permettant de fixer et de bloquer en position l'ensemble constitué par le pied de valve et le berceau de réception sur la jante (16).

2. Dispositif selon la revendication 1, **caractérisé en ce que** la partie sensiblement sphérique comporte une première pluralité de facettes (23) adaptées pour coopérer avec une seconde pluralité de facettes (24) ménagées sur la partie correspondante du boîtier.

3. Dispositif selon la revendication 2, **caractérisé en ce que** l'angle (α) de basculement du boîtier par rapport à la valve est déterminé par le couple de facettes en contact lors du serrage de l'écrou (15) de fixation sur le fût (14) de la valve.

4. Dispositif selon l'une quelconque des revendications 2 ou 3, **caractérisé en ce que** chacune des facettes (23) de la première pluralité et de la seconde pluralité (24) présente une inclinaison différente.

5. Dispositif selon la revendication 1, **caractérisé en ce que** la partie sensiblement sphérique du pied de valve comporte une pluralité de rainures (26) adaptées pour coopérer avec des ergots (27) ménagés sur la partie correspondante du boîtier, de manière à assurer un serrage sans glissement du pied de valve dans la partie correspondante du boîtier, selon un angle d'inclinaison prédéterminé.

6. Dispositif selon la revendication 1, **caractérisé en ce que** la partie sensiblement sphérique du pied de valve comporte des ergots (27) adaptés pour coopérer avec une pluralité de rainures (26) ménagée sur la partie correspondante du boîtier, de manière à assurer un serrage sans glissement du pied de valve dans la partie correspondante du boîtier, selon un angle d'inclinaison prédéterminé.

7. Dispositif selon l'une quelconque des revendications précédentes, **caractérisé en ce qu'**une pièce de renfort (30) de forme correspondante au profil externe du boîtier est intercalée entre le boîtier (12) et la jante (16) de manière à éviter tout matage entre le boîtier et sa zone d'appui sur la jante.

8. Dispositif selon la revendication 7, **caractérisé en ce que** le pied de valve et la pièce de renfort sont métalliques et le boîtier est réalisé en matière plastique.

## Claims

1. Device (10) for articulating a tyre-pressure sensor to a motor vehicle rim (16), said device consisting of:
- a tyre-inflation valve (11) having a base (13) and designed to come into contact with a corresponding part (18) of a tyre-pressure sensor electronic unit (12) referred to as a cradle (18), said valve further having a threaded shank (14) designed to be introduced through an orifice (22) in a wheel rim and to protrude outward from this rim, said valve base being situated in the continuation of the shank,
- a tyre-pressure electronic unit (12) housing the valve base (13) in a cradle (18),
said unit being pressed against the bottom of the rim (16) by tightening a securing nut (15) onto the threaded part of the valve shank, said valve base having an approximately spherical part operating together with a region of corresponding shape formed on the cradle (18)
said articulating device being **characterised in that** the shank (14) of the valve (12) is designed to pass through an aperture (21) made in the cradle (18), then through the orifice (22) made in the rim so as to protrude outward from the rim (16), the aperture (21) allowing the valve shank to be positioned with respect to the unit, the valve base then operating together with the unit cradle to press this unit against the rim (16), the securing nut (15) allowing the entity consisting of the valve base and the cradle to be fixed on the rim (16) and locked in position.

2. Device according to claim 1, **characterised in that** the approximately spherical part comprises a first plurality of facets (23) which are designed to operate together with a second plurality of facets (24) which are formed on the corresponding part of the unit.

3. Device according to claim 2, **characterised in that** the angle (α) of tilting of the unit with respect to the valve is determined by the pair of facets in contact when the securing nut (15) is tightened onto the shank (14) of the valve.

4. Device according to claim 2 or claim 3, **characterised in that** each of the facets (23) of the first plurality and of the second plurality (24) has a different inclination.

5. Device according to claim 1, **characterised in that** the approximately spherical part of the valve base has a plurality of grooves (26) designed to operate together with studs (27) that are formed on the corresponding part of the unit, so as to provide slip-free clamping of the valve base in the corresponding part of the unit, at a predetermined angle of inclination.

6. Device according to claim 1, **characterised in that** the approximately spherical part of the valve base has studs (27) designed to operate together with a plurality of grooves (26) that is formed on the corresponding part of the unit, so as to provide slip-free clamping of the valve base in the corresponding part of the unit, at a predetermined angle of inclination.

7. Device according to one of the preceding claims, **characterised in that** a reinforcing piece (30) of a shape corresponding to the external profile of the unit, is inserted between the unit (12) and the rim (16) so as to avoid any hammering between the unit and the region in which it bears against the rim.

8. Device as claimed in claim 7, **characterised in that** the valve base and the reinforcing piece are made of metal and the unit is made of plastic.

## Patentansprüche

1. Gelenkvorrichtung (10) von einem Reifendrucksensor auf einer Felge (16) eines Fahrzeugs, wobei die Vorrichtung umfasst:
- ein Schlauchventil (11) der Reifen, das einen Fuß (13) aufweist, der angepasst ist, um in Berührung mit einem entsprechenden Abschnitt, Aufnahmewiege (18) genannt, eines elektronischen Gehäuses (12) eines Reifendrucksensors zu kommen, wobei das Ventil außerdem einen Gewindeschaft (14) aufweist, der angepasst ist, um durch eine Öffnung (22) einer Felge eines Rades eingeführt zu werden, und von dieser Felge nach Außen hervorzustehen, wobei sich der Ventilfuß in der Verlängerung des Schafts befindet,
- ein elektronisches Gehäuse (12) für den Reifendruck, das den Ventilfuß (13) in einer Aufnahmewiege aufnimmt,
wobei das Gehäuse gegen das Bett der Felge (16) durch Anziehen einer Befestigungsmutter (15) am Gewindeabschnitt des Ventilschafts drückt, wobei der Ventilfuß einen deutlich kugelförmigen Abschnitt aufweist, der mit einem Bereich mit einer entsprechenden Form zusammenwirkt, der auf der Aufnahmewiege (18) angeordnet ist
wobei die Gelenkvorrichtung **dadurch gekennzeichnet ist, dass** der Schaft (14) des Ventils (12) dafür ausgestaltet ist, durch eine Öffnung (21), die in der Aufnahmewiege (18) ausgeführt ist, dann durch die Öffnung (22), die in der Felge so ausgeführt ist, dass er von der Felge (16) nach Außen hervorsteht, hindurch zu gehen, wobei die Öffnung (21) das Positionieren des Ventilschafts in Bezug auf das Gehäuse ermöglicht, wobei der Ventilfuß dann mit der Aufnahmewiege des Gehäuses zusammenwirkt, um dieses Gehäuse gegen die Felge (16) zu drücken, wobei die Schraubenmutter (15) es ermöglicht, die Einheit in ihrer Position zu befestigen und zu halten, die aus dem Ventilfuß und der Aufnahmewiege auf der Felge (16) besteht.

2. Vorrichtung nach Anspruch 1, **dadurch gekennzeichnet, dass** der deutlich kugelförmige Abschnitt eine erste Mehrzahl Facetten (23) aufweist, die angepasst sind, um mit einer zweiten Mehrzahl Facetten (24) zusammenzuwirken, die auf dem entsprechenden Abschnitt des Gehäuses angeordnet sind.

3. Vorrichtung nach Anspruch 2, **dadurch gekennzeichnet, dass** der Winkel (α) des Kippens des Gehäuses in Bezug auf das Ventil durch das Facettenpaar bestimmt ist, das bei dem Anziehen der Befestigungsmutter (15) am Schaft (14) des Ventils in Berührung kommt.

4. Vorrichtung nach einem der Ansprüche 2 oder 3, **dadurch gekennzeichnet, dass** jede der Facetten (23) der ersten Mehrzahl und der zweiten Mehrzahl (24) eine verschiedene Neigung aufweist.

5. Vorrichtung nach Anspruch 1, **dadurch gekennzeichnet, dass** der deutlich kugelförmige Abschnitt des Ventilfußes eine Mehrzahl Nuten (26) aufweist, die angepasst sind, um mit Stiften (27) zusammenzuwirken, die auf dem entsprechenden Abschnitt des Gehäuses angeordnet sind, so dass ein rutschfreies Klemmen des Ventilfußes im entsprechenden Abschnitt des Gehäuses gemäß einem vorbestimmten Neigungswinkel gewährleistet ist.

6. Vorrichtung nach Anspruch 1, **dadurch gekennzeichnet, dass** der deutlich kugelförmige Abschnitt des Ventilfußes Stifte (27) aufweist, die angepasst sind, um mit einer Mehrzahl Nuten (26) zusammenzuwirken, die auf dem entsprechenden Abschnitt des Gehäuses angeordnet sind, so dass ein rutschfreies Festziehen des Ventilfußes in dem entsprechenden Abschnitt des Gehäuses gemäß einen vorbestimmten Neigungswinkel gewährleistet ist.

7. Vorrichtung nach einem der vorhergehenden Ansprüche, **dadurch gekennzeichnet, dass** ein Verstärkungsteil (30) mit einer Form entsprechend dem Außenprofil des Gehäuses zwischen dem Gehäuse (12) und der Felge (16) gesetzt wird, so dass jegliche Verstemmung zwischen dem Gehäuse und seinem Druckbereich auf der Felge vermieden wird.

8. Vorrichtung nach Anspruch 7, **dadurch gekennzeichnet, dass** der Ventilfuß und das Verstärkungsteil aus Metall sind und das Gehäuse aus Kunststoff ausgeführt ist.
